# EUROPEAN PATENT APPLICATION

(11) **EP 1 074 594 A2**
(43) Date of publication of application: **07.02.2001**
(21) Application number: 00306623.0
(22) Date of filing: 03.08.2000
(51) Int. Cl.: C09J 7/02

(54) **Adhesive tapes**

(30) Priority: 05.08.1999 GB 9918378
(71) Applicant: SCAPA GROUP PLC, Blackburn, Lancashire BB2 6AY (GB)
(72) Inventor: Symons, Keith, Liverpool L25 5LA (GB)
(74) Representative: Goodwin, Mark

(57) **Abstract**

An adhesive tape in which a layer of waterproof material is applied to a woven or stitchbonded fabric (2). A layer of adhesive (6) is coated on the exposed face of the waterproof material (4).

## Description

The present invention relates to adhesive tapes and particularly, but not exclusively, to adhesive tapes having a fabric, or other substrate, backing layer with a pressure sensitive adhesive coating.

Conventionally such adhesive tapes comprise a fabric backing layer coated with a pressure sensitive adhesive, the tape being wound into an Archimedes spiral. A release liner, such as silicone release paper is affixed to the exposed adhesive on the underside of the backing layer so as to ensure that the adhesive does not bond to the adjacent layer of tape in the Archimedes spiral. This would result in so called "blocking" and prevent tape unwind. The release liner is discarded after use.

The presence of the liner is inconvenient when using the tape. In order to dispose of the requirement for the liner it is well known to select a suitable woven or nonwoven fabric backing layer which has a profiled surface topography so as to provide a series of so-called "hills and valleys". This arrangement provides a plurality of point contacts rather than a continuous contact between the adhesive and the adjacent layer of fabric material in the Archimedes spiral. Conventionally woven fabrics provide a suitable surface topography as do stitchbonded materials, such as Maliwatt (TRADE MARK) fabrics, which comprise a sewn non-woven material having a profile of valleys and elevations from seam to seam and from stitch to stitch.

These known forms of tapes have the disadvantage that they are not waterproof. In order to deal with this it is known to provide a plastics outer layer as a waterproof layer over a woven fabric backing layer of some tapes, on the side remote from the adhesive layer. However introduction of a waterproof outer plastics layer gives rise to further disadvantages. The fabric backing of the tape conventionally provides noise insulation, which is particularly useful in applications where the item bound by the tape is prone to vibration. However, applying a waterproof plastics layer to the fabric reduces the cushioning properties of the fabric and results in poor noise insulation when the item bound by the tape contacts surrounding structures.

A further problem with the known waterproof adhesive tapes mentioned above is that they are also poor electrical insulators, and are therefore prone to electrical breakdown. A still further problem which arises is that a large quantity of adhesive is required for the adhesive coating, because it is necessary to fill in the valleys in the backing layer with the adhesive.

It is an object of the present invention to provide an adhesive tape which overcomes or alleviates the above described drawbacks of such known adhesive tapes.

According to the present invention there is provided an adhesive tape comprising a backing layer, a layer of waterproof material applied to the backing layer and a layer of adhesive applied to the waterproof material.

With this arrangement it is possible to prevent moisture reaching the adhesive, without reducing the cushioning nature of the backing layer.

This has the further advantage that the waterproof material coating helps bind the backing layer making it easier to tear. Also the waterproof coating provides resistance to 'necking' of the backing layer by giving it some additional rigidity. Any suitable method may be used for applying the adhesive and the waterproof coating. Depending on the amount and type of waterproof coating used, the stiffness and thickness characteristics of the tape can be easily modified. The characteristics can be adapted so as to produce a tape particularly useful as a wiring harness tape. Also, by providing the waterproof coating as a middle layer (between the backing layer and the adhesive) the cushioning nature and thereby the noise damping properties of the backing layer is not reduced.

Furthermore, during the production of the tape, the adhesive can be applied at a low viscosity during spreading of the adhesive on the coating, because the coating renders the fabric impervious to liquid or hot melt adhesive. A normal minimum viscosity for adhesives may be as high as 20,000 centipose (cp) for a lightweight backing fabric, but for the present invention viscosities as low as 2,000 cp can be used. This means that a lower viscosity adhesive can be applied and spread much more easily on the coating without any risk of it passing through the backing layer. In a preferred embodiment of the invention the viscosity of the adhesive when being applied to the waterproof coating is in the range from 2000 cp to 19000 cp.

The adhesive preferably comprises any of the following either alone or in combination:- natural rubber, an acrylic, styrene/isoprene/styrene block copolymer, isoprene isobutylene rubber (i.e. butyl rubber) and polyisobutylene.

The waterproof material preferably comprises any of the following either alone or in combination:- polyethylene, polypropylene, polyvinyl chloride or an acrylic.

Preferably, the waterproof coating has a substantially flat surface on its side which faces the adhesive. This has the advantage that the adhesive is being applied to a substantially flat layer, and therefore less adhesive is required because any undulations in the backing layer have been filled in, or covered by the waterproof coating. This results in a 10% to 50% reduction in the amount of adhesive needed, depending on the type of backing layer used, when compared to the same type of backing layer without the waterproof coating.

The waterproof, i.e. water impermeable, coating reinforces the fabric and in particular strengthens weaker fabrics, such as stitchbonded fabrics. This reinforcement effect of the waterproof coating facilitates the application of the adhesive to the waterproof coating by calendering in such weaker fabrics. This is a particularly good method of adhesive application in that it is cheap and environmentally friendly, no solvent being required. Without the aforesaid reinforcing effect the use of calendering in adhesive application to certain fabrics would not be practical as the fabric would be destroyed during the calendering process.

Preferably, the waterproof material and/or adhesive comprise active materials that migrate into the other of the adhesive and/or waterproof material to enable or further enhance cross-linking between the adhesive and waterproof material. This has the advantage of rapid, consistent cross-linking between the waterproof material and adhesive with no problems of pot life. For example sulphor donors may be provided in one of the waterproof or adhesive layers and ultra accelerators in the other. An example is dithiocaprolactam or piperidine pentamethylene dithiocarbamate in one layer and a combination of zinc dibutyl dithiocarbamate and n-dibutylamine in the other.

Preferably, the waterproof coating is an electrical insulator. Conventional adhesive coated fabrics do not have good electrical properties in that breakdown occurs very quickly. Such products will typically only last 10 seconds before electrical breakdown occurs, compared to the tapes of the present invention which preferably last for at least 40 seconds, more preferably at least 50 seconds and ideally at least 60 seconds when tested in accordance with British Standard 1078, where the material to be tested is held between two conducting plates and subjected to 1,000V AC, with the time until breakdown occurs being measured. This has the advantage that the tape can find an application in binding cables.

Preferably the waterproof coating comprises a uv stabiliser. This has the advantage of improved resistance to ultra violet light, with consequential protection of the adhesive layer. Preferred UV stabilisers are tin based such as the stabiliser sold under the trade mark TINUVIN.

Any fabric may be used which has a surface topography facilitating point contact between the adhesive coated on the backing layer and any fabric of an adjacent layer of the Archimedes roll into which the tape is wound. Woven fabrics or stitchbonded fabrics are preferred.

It is noted that in some embodiments of the invention a release liner may be provided over the exposed face of the adhesive. One particular example of this is to allow for the making of die cut pieces.

By way of example only specific embodiments of the present invention will now be described with reference to the accompanying drawings, in which:-
- Fig. 1: is a schematic cross-sectional view of an adhesive tape constructed in accordance with one embodiment of the present invention; and
- Fig. 2: is a schematic cross-sectional view of an adhesive tape constructed in accordance with a second embodiment of the present invention.

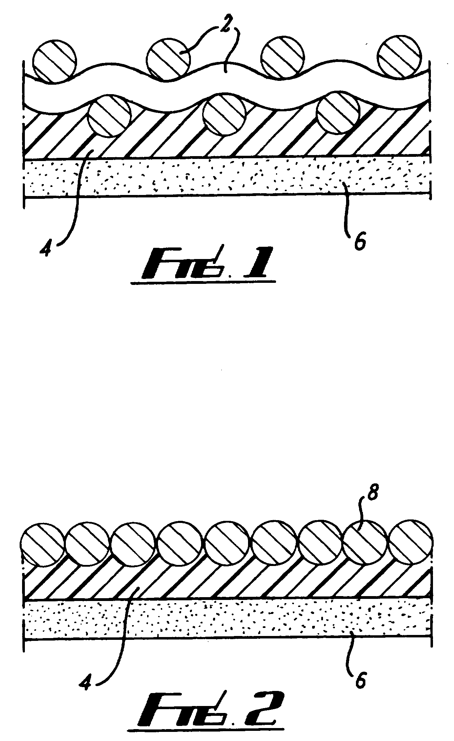

Referring to Fig. 1 a first embodiment of adhesive tape comprises a textile backing in tape form comprising a woven fabric 2. The backing layer is coated with a waterproof plastics layer 4 by any known coating method involving either dry or wet coating.

In use, the plastics layer 4 renders the tape substantially water and moisture proof.

In a second embodiment, as illustrated in Fig. 2, the woven backing is replaced by a sewn non-woven fabric 8 comprising a plurality of seams formed by stitching. A plastics coating 4 and adhesive layer 6 are formed thereon as described above.

In a third embodiment the coating is used as a carrier of active materials, or catalysts that function by migrating into the adhesive to improve the bonding of the adhesive to the coating.

In a fourth embodiment, the coating forms an electrical insulating layer.

In a fifth embodiment, the coating includes a U.V. stabiliser.

The plastics coating has been illustrated as entering the depressions in the backing layers surface. However, the plastics coating may simply be a surface coating.

The adhesive has been described as being applied to just one side of the backing. However the adhesive could be applied to both sides. Furthermore an additional plastics coating could be provided on the opposite side of the backing.

It is of course to be understood that the invention is not to be restricted to the details of the above embodiments which are described by way of example only.

For example, the tape may also include a release liner, releasably attached to the adhesive layer.

Further the coating and/or adhesive layer may incorporate one or more pigment materials and/or one or more flame retardant or otherwise fireproof materials. Preferred examples of flame retardants include any of the following either alone or in combination: halogenated polymers together with antimony trioxide, phosphates, borates, aluminium trihydrates and magnesium hydroxide.

A plastics coating has been described, but the coating could be any suitable material for example a rubber coating or the like, which is able to provide a moisture proof layer.

## Claims

1. An adhesive tape comprising a backing layer, a layer of waterproof material applied to the backing layer and a layer of adhesive applied to the waterproof material.

2. An adhesive tape as claimed in claim 1, characterised in that the backing layer is a fabric.

3. An adhesive tape as claimed in claim 1 or claim 2, characterised in that the backing layer is a woven fabric.

4. An adhesive tape as claimed in claim 1 or claim 2, characterised in that the backing layer is a stitchbonded fabric.

5. An adhesive tape as claimed in any preceding claim, characterised in that the adhesive comprises any of the following either alone or in combination:- natural rubber, an acrylic, styrene/isoprene/styrene block copolymer, isoprene, isobutylene rubber (i.e. butyl rubber) and polyisobutylene.

6. An adhesive tape as claimed in any preceding claim, characterised in that the waterproof material includes any of the following either alone or in combination:- polyethylene, polypropylene, polyvinyl chloride or an acrylic.

7. An adhesive tape as claimed in any preceding claim, characterised in that the viscosity of the adhesive on application of the adhesive to the waterproof material is in the range from 2000 cp to 19000 cp.

8. An adhesive tape as claimed in any preceding claim, characterised in that the tape satisfies the British Standard 1078 test for electrical properties for at least 40 seconds.

9. An adhesive tape as claimed in any preceding claim, characterised in that the waterproof material and/or adhesive comprises active materials that migrate into the other of the adhesive and/or waterproof material to enable or further enhance cross linking.
